(19) **Europäisches Patentamt**
**European Patent Office**
**Office européen des brevets**

(11) **EP 2 924 301 A1**

(12) **EUROPEAN PATENT APPLICATION**
published in accordance with Art. 153(4) EPC

(43) Date of publication:
**30.09.2015 Bulletin 2015/40**

(21) Application number: **13857625.1**

(22) Date of filing: **13.11.2013**

(51) Int Cl.:
*F16B 2/06* (2006.01)  *E04G 7/14* (2006.01)
*E04G 7/16* (2006.01)

(86) International application number:
**PCT/CN2013/087084**

(87) International publication number:
**WO 2014/079336 (30.05.2014 Gazette 2014/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.11.2012 CN 201210480143**
**07.02.2013 CN 201310049742**

(71) Applicant: **Zhou, Lixin**
**Handan, Hebei 057150 (CN)**

(72) Inventor: **Zhou, Lixin**
**Handan, Hebei 057150 (CN)**

(74) Representative: **Thibon, Laurent**
**Cabinet Beaumont**
**1, rue Champollion**
**38000 Grenoble (FR)**

(54) **FASTENER**

(57)　A fastener for clamping an object comprises a first clamp arm (1301) and a second clamp arm (1305), the first end (1303) of the first clamp arm (1301) is rotatably connected to the first end (1306) of the second clamp arm (1305), when clamping the object, a cavity for holding the object is defined between the first clamp arm and the second clamp arm, a first hasp (1310) is connected to the second end (1302) of the first clamp arm (1301), and the first hasp (1310) is used to connect with a locking device (1308), and the locking device (1308) is also used to connect with the second end (1307) of the second clamp arm (1305).

Figure 1A

EP 2 924 301 A1

**Description**

**CROSS-REFERENCE TO RELATED APPLICATIONS**

This application claims the priorities of Chinese patent applications No. 201210480143.8 filed November 22, 2012 and entitled "Fastener and Manufacturing Method therefor" and No. 201310049742.9 filed February 7, 2013 and entitled "Fastener and Manufacturing Method therefor", which are incorporated herein by reference in their entirety.

**FIELD OF THE INVENTION**

The invention relates to fastening devices, in particular a fastener for clamping an object, such as a construction fastener for build a falsework.

**BACKGROUND OF THE INVENTION**

The fasteners have been widely used as locking devices in various fields, such as in a construction field to build a falsework. In the prior art, the fastener typically includes a cover arm and a base (which are generally referred to as clamp arms hereinafter) which are rotatably connected to each other through a pin.
The existing fasteners are generally manufactured by mold casting or smithing.
In manufacturing a fastener by mold casting, a through hole in the cover arm and a through hole in the base, which are used for receiving the pin, are formed by a punching process. Such fastener is typically made of malleable steel, particularly, the cover arm and the base are individually casted by molds, subjected to an anneal process and then punched to form the through holes for receiving the pin, as disclosed by Chinese patent application publication No. CN1629420A. However, due to the casting process used for manufacturing the fastener, raw material are heated and then experience casting and anneal processes, resulting in high energy consumption, high requirements for manufacturing devices, a long manufacturing cycle, a high overall production cost, and environmental pollution. Additionally, the main material of such fastener, i.e. the malleable steel or cast iron, has a high carbon content, and hence is fragile and has a low compressive strength. In order to improve the compressive strength, the cover arm and the base have to be enlarged, leading to more material used in the fastener and a high weight of the fastener.
A fastener manufactured by smithing is typically made of steel sheet. To form the through holes in the cover arm and in the base to receive the pin used for the rotatable connection between the cover arm and the base, the cover arm and the base have to be subjected to smithing at a high temperature to form relatively large planar portions, which are subsequently punched to form the through holes therein. The edges of the through holes are wide enough to ensure sufficient connection strength. However, the cost of such fastener is much higher than the mode cast fastener because of a high cost of the smithing process, high requirements for the manufacturing device (for example, a mold for the manufacturing device is required to be resistant to a high temperature) and much material as used.
Another fastener made of steel sheet is also disclosed by Chinese patent application No. CN102322464A, but is complicated in manufacturing, has a high weight, a slow manufacturing speed, and a strength not high enough. A contact face between the fastener and an object to be clamped therein is not large enough, and leads to a limited friction force between the fastener and the object, resulting in a poor skidproof effect. Further, the rotatable connection between the cover arm and the base might be likely broken in use.
As such, the existing fasteners are disadvantageous for low locking strength due to low strength of the pin connection between the cover arm and the base. A way to improve the strength of the fastener is to enlarge its parts including the cover arm, the base and the pin, but the material used is increased as well, leading to increased cost and weight.
Even though some existing fastener has an improved strength, but is complicated and costly in manufacturing, and is not successful in the market.
Furthermore, the rotatable connection between the cover arm and the base of the traditional fastener is weak and is unrecoverable after deformation or damage, thus the deformation or damage of the rotatable connection leads to malfunction and low safety of the entire fastener.

**SUMMARY OF THE INVENTION**

To address the above problems, a first aspect of the invention provides a fastener for clamping an object, including a first clamp arm and a second clamp arm, where a first end of the first clamp arm and a first end of the second clamp arm are rotatably connected with each other, a cavity for accommodating an object clamped by the fastener is formed between the first clamp arm and the second clamp arm, a first hasp for engaging with a locking device is connected with a second end of the first clamp arm, and the locking device is further configured to engage with a second end of the second clamp arm.

Preferably, a first end of the first hasp is extended through an opening at the second end of the first clamp arm towards the cavity to wind an edge of the opening, and is located within the cavity and in frictional contact with the object clamped by the fastener.

Preferably, a second end of the first hasp, which is opposite to the first end of the first hasp, is provided with a notch or through hole configured to be passed through by the locking device, and the first end of the first hasp is sandwiched between the second end of the hasp and the object clamped by the fastener.

Preferably, the fastener is a construction fastener, the first clamp arm is a cover arm of the construction fastener, the second clamp arm is a base of the construction fastener, and an opening in communication with the cavity is provided at an intermediate portion of the first clamp arm between the first end and the second end of the first clamp arm; or the fastener is a construction fastener, the first clamp arm is a base of the construction fastener, the second clamp arm is a cover arm of the construction fastener, and an opening in communication with the cavity is provided at an intermediate portion of the second clamp arm between the first end and the second end of the second clamp arm.

Preferably, at least one of the cover arm and the base is formed by a bent steel bar or by a closed or unclosed steel loop; or the cover arm is formed by a bent steel bar and the base is formed by a steel sheet.

Preferably, the first end of the first clamp arm and the first end of the second clamp arm are rotatably connected with each other by a rotatable connection mechanism which includes a pin and a winding portion rotatably winding the pin, and where the pin is connected with or is a part of one of the first and second clamp arms, a first end of the winding portion is connected with or is a part of the other of the first and second clamp arms, and a second end of the winding portion winds the pin and is located within the cavity and in frictional contact with the object clamped by the fastener.

It should be noted that a connection between two objects in the invention may refer to a direct connection between these two objects, or an indirect connection between these two objects via a third part.

Preferably, an opening in communication with the cavity is provided at the first end of the first clamp arm, the pin is formed by an edge of the opening at the first end of the first clamp arm, and an extended portion, which forms the winding portion, is provided at the first end of the second clamp arm; and where the extended portion is extended through the opening at the first end of the first clamp arm towards the cavity to wind an edge of the opening, to form the rotatable connection, and an end of the extended portion (i.e. a second of the winding portion) is located within the cavity and in frictional contact with the object clamped by the fastener.

The fastener of the invention further includes a connection buckle forming the wingding portion, where a first opening in communication with the cavity is provided at the first end of the first clamp arm, a second opening in communication with the cavity is provided at the first end of the second clamp arm, and an edge of the first opening forms the pin, and where one end of the connection buckle is extended through the first opening towards the cavity to wind the edge of the first opening to form the rotatable connection, the other end of the connection buckle is extended through the second opening towards the cavity to wind an edge of the second opening, and tips at both ends of the connection buckle are located in the cavity and in frictional contact with the object clamped by the fastener.

Preferably, the first end of the first clamp arm includes a first extended portion which forms the winding portion and winds the pin towards the cavity, the first end of the second clamp arm includes a second extended portion which winds the pin towards the cavity, so that the rotatable connection is formed, and where an end of the first extended portion and an end of the second extended portion are located within the cavity and in frictional contact with the object clamped by the fastener.

Preferably, a second hasp is provided at the second end of the second clamp arm, an opening in communication with the cavity is provided at the second end of the second clamp arm, an end of the second hasp is provided with a notch or through hole configured to engage with the locking device, an opposite end of the second hasp is extended through an opening at the second end of the second clamp arm towards the cavity to wind an edge of the opening to form the rotatable connection, and the opposite end of the second hasp is located within the cavity and in frictional contact with the object clamped by the fastener; or,

an opening in communication with the cavity is provided at the second end of the second clamp arm, the locking device is a bolt, a tip at one end of the bolt is extended through the opening at the second end of the second clamp arm toward the cavity to wind an edge of the opening to form the rotatable connection, and the tip at the one end of the bolt is located within the cavity and in frictional contact with the object clamped by the fastener; or,

a self-locking device is provided at the second end of the first clamp arm, and includes a housing, a locking rod, a first lock block and a second lock block, the housing is formed by the first hasp, and the locking rod forms the locking device; the housing includes a cavity, and a wall of the cavity of the housing includes a first frictional contact face and a fourth frictional contact face, the locking rod includes a second frictional contact face and a third frictional contact face, and is movable into the cavity of the housing so that the first and second frictional contact faces face each other and the third and fourth frictional contact faces face each other, and where the first lock block is movable between the first and second frictional contact faces and is in contact with the first and second frictional contact faces, and the second lock block is movable between the third and fourth frictional contact faces and is in contact with the third and fourth frictional contact faces; the first and second frictional faces form an angle $\alpha$ therebetween, the third and fourth frictional contact faces form an angle $\alpha'$ therebetween, and $\alpha \le \varphi_1 + \varphi_2$ and $\alpha' \le \varphi_3 + \varphi_4$, where $\varphi_1$ and $\varphi_2$ represent frictional angles of the first lock block with respect to the first and second frictional contact faces, respectively, and $\varphi_3$ and $\varphi_4$ represent frictional angles of the second lock block with respect to the third and fourth frictional contact faces, respectively; an end of the locking rod is configured to engage with the second clamp arm; preferably, at least one end of each of the first and second lock blocks is located outside of the cavity of the housing and includes a flange; and preferably, $0 < \alpha \le 17°$, and/or $0 < \alpha' \le 17°$.

Preferably, the first lock block is slidable on the first frictional contact face, and the second lock block is slidable on the fourth frictional contact face, more preferably, a first guide slot or ridge for the first lock block and a second guide slot or ridge for the second lock block are provided on the wall of the cavity of the housing, correspondingly, a ridge or guide slot matching with the first guide slot or ridge is provide on the first lock block, and a ridge or guide slot matching with the second guide slot or ridge is provide on the second lock block.

The fastener of the invention further includes an elastic member configured to maintain the first and second lock blocks to be in contact with the locking rod, one end of the elastic member abuts against the housing, and the other end of the elastic member abuts against the first and second lock blocks; or a first elastic member and a second elastic member are provided inside the cavity of the housing, an end of the first elastic member abuts against an inner wall of the housing, and the other end of the first elastic member abuts against the first lock block to prevent the first lock block from being released from the first lock block; and an end of the second elastic member abuts against the inner wall of the housing, and the other end of the second elastic member abuts against the second lock block to prevent the second lock block from being released from the second lock block.

Preferably, the fastener is a construction fastener, the first clamp arm is a cover arm of the construction fastener, and the second clamp arm is a base of the construction fastener; or the fastener is a construction fastener, the first clamp arm is a base of the construction fastener, and the second clamp arm is a cover arm of the construction fastener.

A right-angle construction fastener is constructed by a first fastener and a second fastener embodied as the above fasteners, where a first clamp arm or a second clamp arm of the first fastener and a first clamp arm or a second clamp arm of the second fastener are fixedly and perpendicularly connected with each other to form a base of the right-angle construction fastener.

A rotatable construction fastener is constructed by a first fastener and a second fastener embodied as the above fasteners, where a first clamp arm or a second clamp arm of the first fastener and a first clamp arm or a second clamp arm of the second fastener are rotatably connected with each other to form a base of the rotatable construction fastener.

In the invention, the clamp arms may be made of steel (such as steel No. Q195,

Q235,ML08, ML15, 35K, and 45#20MnTiB.40Cr) which has higher tenacity and rigid than the malleable steel. Further, the rotatable connection formed by the winding extended portion and an end of the hasp is in frictional contact with the clamped object can be easily achieved, thereby avoiding the casting, anneal and punching processes for the traditional fastener made of the malleable steel. The end of the extended portion and the end of the hasp are located within the cavity and in frictional contact with the clamped object, and hence will not be moved relative to the clamped object due to the increased clamping force of the fastener, thus the action forces between the fastener and the clamped object are fully utilized to enhance the clamping effect of the fastener, which is not conceivable with the traditional fasteners. Also, the end of the extended portion needs not to be welded to the second clamp arm, thereby simplifying the processes for the fasteners. In addition, the strength of the fastener of the invention is significantly improved over the traditional fasteners made of steel sheet.

The structure of the inventive structure of the fastener of the invention allows the adoption of steel with high strength and tenacity without limitations by the traditional fasteners, so that some parts in the traditional fastener are eliminated, thereby saving material of the fastener, and lowering the weight and costs of the fastener. Due to the reduced weight of the fastener of the invention, the load caused by the fastener in use is decreased. For example, when the fasteners of the invention are used to establish a falsework, the established falsework has a reduced weight per se, which means that the falsework has an improved weight bearing ability and safety.

The clamp arm may be formed by steel bars without heating, thereby simplifying the manufacturing process of the fastener and lowering its costs.

Therefore, the inventive fastener is much advantageous over the prior art. For example, the manufacture of the fastener needs not heating or casting and energy consumption is reduced; steel with higher strength and tenacity may be used to improve the strength of the fastener; the frictional forces between the fastener and the clamped object are fully utilized to improve the stability and safety of the rotatable connection mechanism and the hasp; and parts of the fastener are easy to made and manufacturing costs of the fastener are lowered.

**BRIEF DESCRIPTION OF THE DRAWINGS**

The present invention will be described below in combination with the accompanying drawings. Illustrative embodiment of the invention and description thereof are merely used for explaining the invention, rather than limiting the invention.

Figs.1A-1B respectively show a perspective view and a front view of a fastener according to a first embodiment of the invention;

Fig.1C shows a perspective view of a fastener according to a second embodiment of the invention;

Figs.1D-1F respectively show a top view, a sectional view along a line A-A and a perspective view of a right-angle construction fastener according to an embodiment of the invention;

Figs.1G-1H respectively show a perspective view and a front view of a hasp (or buckle) of the fastener according to an embodiment of the invention;

Fig.2A shows a self-locking principle of a first example of a self-locking device used in the fastener according to an embodiment of the invention;

Fig.2B shows a force triangle illustrating the principles of the first example of the self-locking device used in the fastener according to the embodiment of the invention;

Figs.2C-2D respectively show structures and principles of a second example of the self-locking device used in the fastener according to an embodiment of the invention;

Fig.3A shows a perspective view of a fastener equipped with the self-locking device;

Fig.3B shows a front view of the fastener equipped with the self-locking device;

Figs.3C-3D show sectional views of the fastener equipped with the self-locking device taken along lines B-B and A-A;

Figs.3E-3G respectively show a perspective view, a front view and a side view of a fastener according to a third embodiment of the invention;

Figs.3H-3I respectively show a right-angle construction fastener and a rotatable construction fastener each constructed by sub-fasteners embodied by the fasteners shown in Figs.3E-3G;

Figs.4A-4B show perspective views of a self-locking device according to a fourth embodiment of the invention;

Fig.4C shows a side view of the self-locking device according to the fourth embodiment of the invention;

Figs.4D-4E show sectional views of the self-locking device taken along the lines A-A and B-B according to the fourth embodiment of the invention;

Fig.4F shows a variant of the self-locking device according to the fourth embodiment of the invention;

Figs.5A-5B show a rotatable connection constructed by a connection buckle between clamp arms according to an embodiment of the invention;

Figs.6A-6B show a front view and a perspective view of a right-angle construction fastener according to a fifth embodiment of the invention;

Figs.7A-7C show a front view, a side view and a perspective view of a right-angle construction fastener according to a sixth embodiment of the invention;

Figs.8A-8B show a front view and a perspective view of a right-angle construction fastener according to a seventh embodiment of the invention;

Figs.9A-9B show a front view and a perspective view of a right-angle construction fastener according to an eighth embodiment of the invention;

Figs.10A-10B show a front view and a perspective view of a rotatable construction fastener according to a ninth embodiment of the invention;

Figs.11A-11B show a front view and a perspective view of a rotatable construction fastener according to a tenth embodiment of the invention; and

Figs.12A-12B show an example of a base of a right-angle construction fastener according to an embodiment of the invention;

**DETAILED DESCRIPTION OF THE EMBODIMENTS**

The invention is described below referring to the accompanying drawings and embodiments. The embodiments or features in embodiments may be combined without conflict.

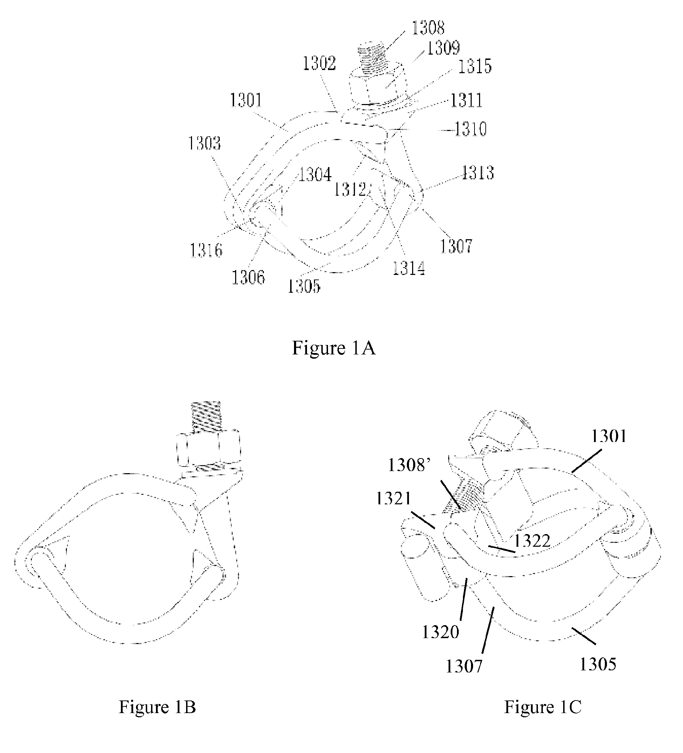

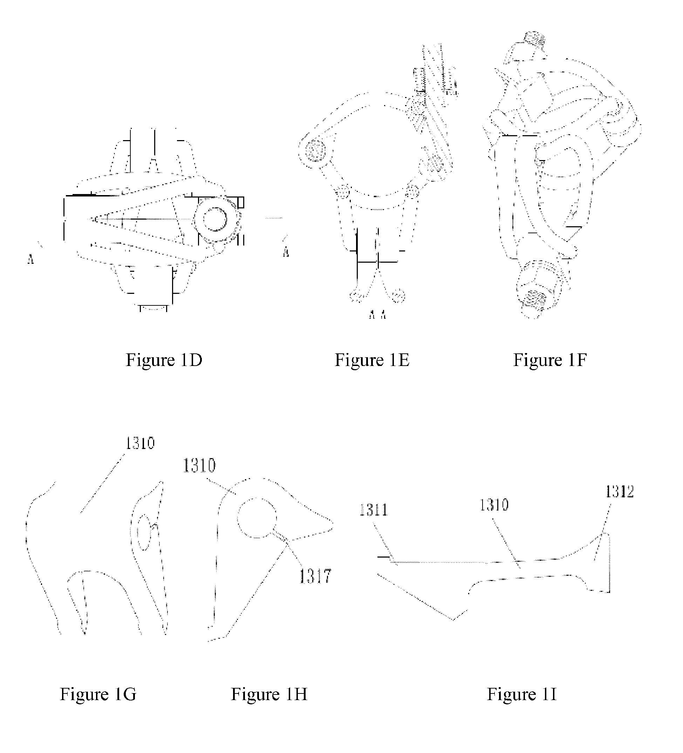

Fasteners according to a first embodiment and a second embodiment of the present invention are described referring to Figs. 1A-1B and 1C. The fastener according to the first embodiment as shown in Figs.1A-1B includes clamp arms 1301 and 1305. A first end 1303 of the clamp arm 1301 is rotatably connected with a fist end 1306 of the clamp arm 1305, and a cavity for accommodating an object is formed between the clamp arms 1301 and 1305 when clamping the object. A hasp 1310 is connected to a second end 1302 of the clamp arm 1301, and is configured to engage with a locking device (which is shown here as a hooked bolt 1308, or may be an eye bolt, a wedged locking rod, a self-locking rod, etc. as described below, as long as it can be engaged with the two clam arms of the fastener so that the object is surrounded and firmly clamped by the fastener), where the locking device is further configured to engage with a second end 1307 of the clamp arm 1305.

In the fastener of the first embodiment, an end 1311 of the hasp 1310 is provided with a notch or through hole, through which the hooked bolt 1308 may be extended to engage therewith. An opposite end 1312 of the hasp 1310 is extended through an opening at the second end 1302 of the clamp arm 1301 toward the cavity of the fastener to wind an edge of the opening, and the opposite end 1312 is located within the cavity and is in frictional contact with the object clamped by the fastener. Another end 1313 of the hooked bolt 1308 winds the second end 1307 of the clamp arm 1305 to form a rotatable connection, and a tip 1314 of the end 1313 is located within the cavity and is in frictional contact with the object clamped by the fastener. A nut (and an optional gasket 1309) may be tightly screwed onto the hooked bolt 1308 to fix the second ends 1302 and 1307 of the two clamp arms relative to each other.

When the fastener in the first embodiment is being used for clamping an object, the end 1312 of the hasp 1310 is clamped between the end 1311 of the hasp 1310 and the object.

The clamp arm 1301 of the fastener in the first embodiment is formed by a bent or folded strip part (such as a steel bar), both ends of the bent strip part are arranged side by side and together form an extended portion 1303 of the clamp arm 1301, and a free end 1304 of the extended portion 1303 is located within the cavity between the clamp arms of the fastener and is in frictional contact with the object clamped by the fastener. The other end 1302 of the clamp arm 1301 includes an opening in communication with the cavity. The clamp arm 1305 may be formed by a closed or unclosed loop, which is constructed by a bent strip part with both ends thereof facing each other, and the ends of the bent strip part are preferably located at the first end 1306 or the second end 1307 of the clamp arm 1305. The extended portion 1303 passes through on opening within the clamp arm 1305 and winds the first end 1306 of the clamp arm 1305, to form the rotatable connection between the clamp arms 1301 and 1305. Here, the clamp arms 1301 and 1305 are formed by bent strip parts such as steel bars, and hence are hollow, that is, the opening at an end of the clamp arm is in communication with an opening at an intermediate portion of the clamp arm.

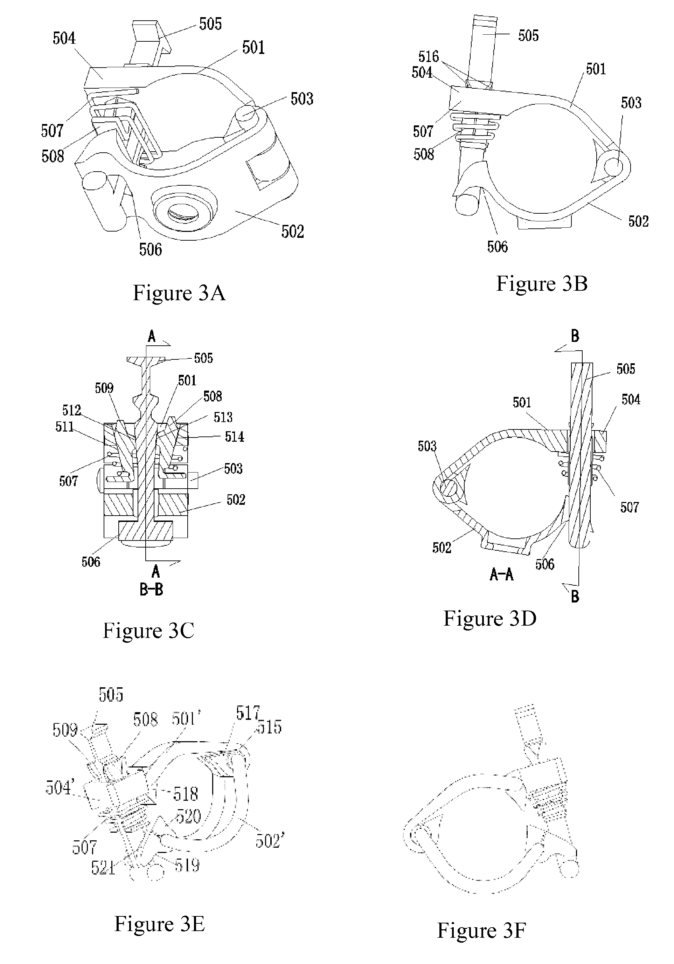

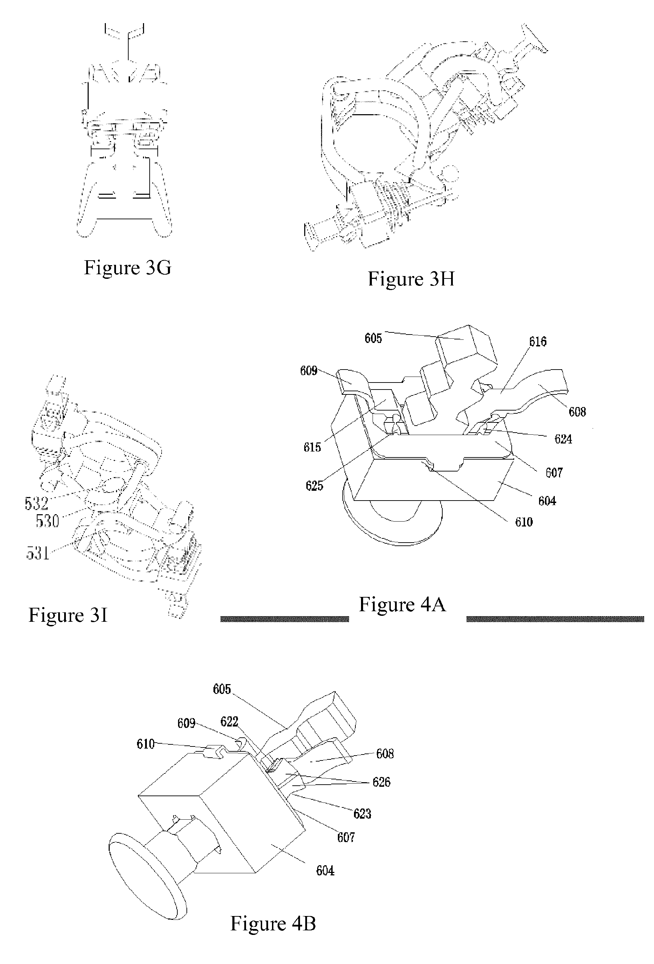

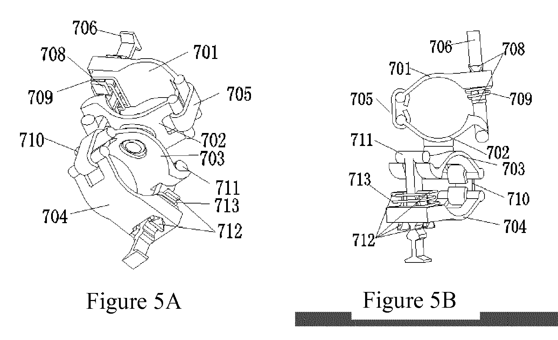

Of course, the rotatable connection between the clamp arms of the fastener may be embodied in other similar structures. For example, as shown in Figures 3A-3B, both an end of a clamp arm 501 of a fastener and an end of a clamp arm 502 of the fastener wind a pin 503, to form a rotatable connection between the two clamp arms 501 and 502. Or, as shown in Figures 5A-5B, a connection buckle 705 winds both an edge of an opening at an end of a clamp arm 701 of a fastener and an edge of an opening at an end of a clamp arm 702 of the fastener, to form a rotatable connection between the clamp arms 701 and 702. Preferably, the connection buckle 705 has a strip shape and is made by a steel plate, a steel band or a steel bar. Further, the connection buckle 705 may alternatively have other shapes, as long as both ends thereof extend through the openings at the ends of the clamp arms to wind edges of the openings.

As can be seen from the above, a first end of a first clamp arm of the inventive fastener is rotatably connected with a first end of a second clamp arm of the fastener by a rotatable connection mechanism, which includes a pin and a winding portion rotatably winding the pin. The pin is connected with or is a part of one of the first and second clamp arms, a first end of the winding portion is connected with or is a part of the other of the first and second clamp arms, and a second end of the winding portion winds the pin and is located within the cavity between the first and second clamp arms and in frictional contact with the object clamped by the fastener.

An optional cylindrical sleeve 1316 may be disposed between the first end 1306 and the extended portion 1303, to facilitate the rotatable connection.

In the prior art, the clamp arm of a fastener is always formed in one body, to improve the integrality and strength of the clamp arm and a clamping effect of the fastener. However, in the present invention, an individual hasp is connected with an end of the clamp arm, that is, the clamp arm is not formed in one body, and the hasp can simplify the structure of the clamp arm, for example, the clamp arm may be simply and easily made by a steel bar. The cover arm of the conventional fastener is integral without opening, however, the cover arm of the fastener in the invention is hollow, which is different from the design in the prior art. With the hasp and the frictional contact mentioned above, the strength of the cover arm will not be degraded, and the weight of the cover arm is reduced to decrease the cost of the fastener.

In constructing a construction fastener with the fasteners in the first embodiment, the clamp arm 1301 may function as the cover arm of the construction fastener and the clamp arm 1305 functions as the base of the construction fastener; or the clamp arm 1301 may function as the base of the construction fastener and the clamp arm 1305 functions as the cover arm of the construction fastener.

The fastener of the invention may include more than one hasp. For example, a fastener in a second embodiment shown in Figure 1C differs from the fastener in the first embodiment in that a second hasp 1320 is connected with the second end 1307 of the clamp arm 1305. An end 1321 of the second hasp 1320 is provided with a notch or through hole for engaging with a T-shaped bolt 1308', an opposite end of the hasp 1320 is extended through an opening within the clamp arm 1305 toward the cavity of the fastener to wind on the second end 1307, and the opposite end 1322 is located within the cavity and is in frictional contact with the object clamped by the fastener. The hasp, which is easy to make and may be flexibly rotatable or fixed on the clamp arm, increases flexibility in opening or locking the clamp arm, to make the fastener more easy to use.

Figs.1G-1H show the hasp 1310, and Fig.1I shows a part which is not yet bent to form the hasp 1310. There is a slit 1317 between both ends of the hasp 1310. When the hasp 1310 is pressed by a bolt in use, one end 1312 of the hasp 1310 is pressed against the object clamped by the fastener, and the other end 1311 of the hasp 1310 might be pressed against the end 1312 due to the elasticity of the hasp 1310 per se, so that the pressure and the friction force between the end 1312 and the object are increased while the slit 1317 disappears.

In the embodiments, the extended portion of the clamp arm may be formed separately from the clamp arm, and then is connected with the clamp arm by means of welding, buckling, rotatable connection, etc.

To further increase the friction force with respect to the clamped object, the free end of the extended portion has a shape matching with the shape of the clamped object, so that a contact area between the free end and the clamped object is increased, and hence safety of the fastener in use is increased.

The opening within the clamp arm may be diversified.

At least one opening in communication with the cavity of the fastener may be formed in an intermediate portion between a first end and a second end of the clamp arm of the fastener in the invention, to further reduce the weight of the fastener and simplify the manufacturing process of the fastener. Preferably, the opening in the intermediate portion of the clamp arm is in communication with the opening at the end of the clamp arm. Preferably, the clamp arm is formed by a U-shaped steel bar, as shown by the clamp arms 1301 and 1305 in Figure 1A.

The winding portion (e.g. the extended portion at an end of the clamp end, or an end of the connection buckle) in the fastener of the invention winds the pin, an edge of an opening or some other part, and the free end of the winding portion is located within the cavity between the clamp arms of the fastener and is in frictional contact with the object clamped by the fastener. In this way, the pressure between the fastener and the clamped object is utilized, so that a friction force is generated between the winding portion (especially the free end thereof) and the clamped object, and the friction force increases as the pressure between the fastener and the clamped object is increased, thereby enhance the clamping effect of the fastener. The free end of the winding portion may be welded onto the clamp arm or not, and processes are simplified in the latter case. In comparison, the clamping effect of the conventional fastener depends on the structure of the fastener per se, without utilizing any force between the fastener and the object clamped by the fastener, as a result, a clamping force of the fastener is limited to about merely 1 to 2 due to the limitation of the connection between the clamp arms. However, in the invention, with the above specific design of the connection between the clamp arms and the hasp, the friction force is fully utilized, and the friction force increases as the clamping force of the fastener is increased, thereby significantly improving the clamping effect of the fastener up to 3, 4, 5 tons, or even higher.

In addition, the fastener in the invention can still work even if some deformation occurs. For example, if the conventional fastener, especially the rotatable connection between the clamp arms, is deformed due to a large load, the clamp arms might be easily broken from the fastener, leading to a safety risk. In the invention, even if the hasp is deformed due to the locking device tightly pressing the hasp, two ends of the hasp will be closer to each other so that the friction force between the end of the hasp and the clamped object is increased, thereby better preventing the release of the hasp from the fastener; or, even if the winding portion is deformed due to a high load, for example, an end of the extended portion is pressed and deformed toward the pin, the friction force between the end of the extended portion and the pin is increased, thereby better preventing the extended portion from releasing from the pin, and hence preventing the separation between the clamp arms and improving safety of the fastener.

Bolts conventionally used in the existing fasteners can also be employed in the fastener of the invention, to lock the free ends (i.e. the second ends) of the clamp arms of the fastener.

Preferably, a self-locking device described below may be employed in the fastener to lock the clamp arm.

In an embodiment, a self-locking device is provided on one of two clamp arms of the fastener, to lock free ends of the clamp arms.

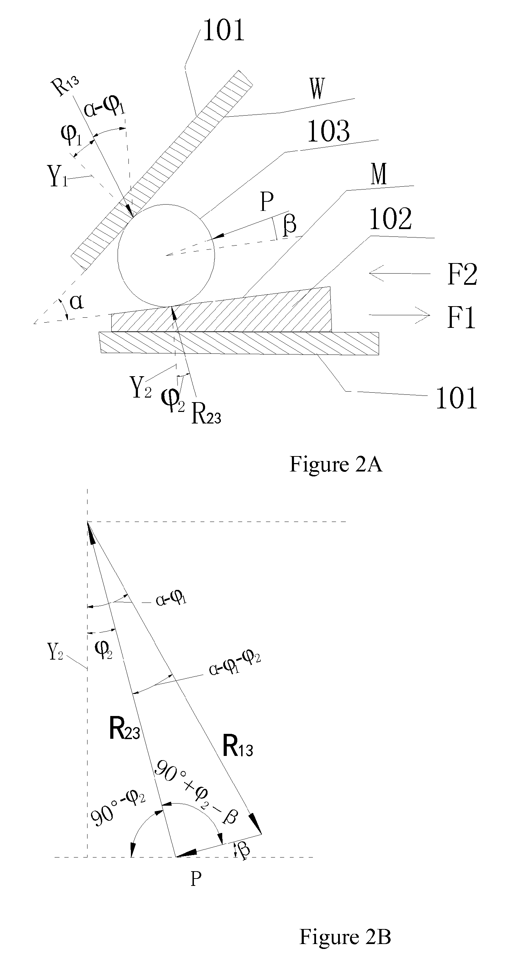

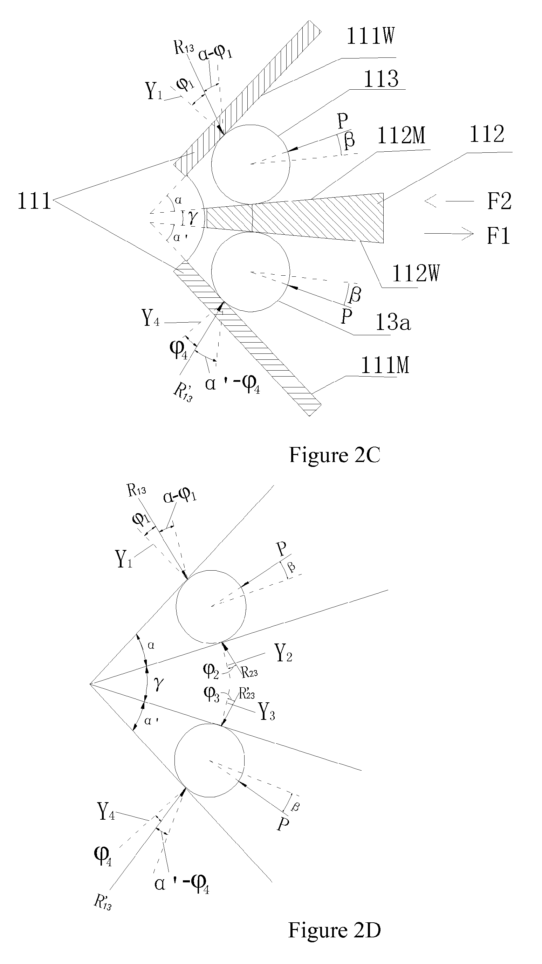

As shown in Figure 2A, a first example of the self-locking device includes: a housing 101 with a cavity therein, a locking rod 102 that is at least partially within the cavity, and a lock block 103. The wall of the cavity of the housing 1 includes a first frictional contact face (i.e. locking face) W, the locking rod 102 includes a second frictional contact face M, and the first and second frictional contact faces W and M face each other and form an angle $\alpha$ therebetween. The lock block 103, which is movable, is disposed between and in frictional contact with the first and second frictional contact faces W and M. The lock block 103 may have diversified shapes such as a sphere, a cylinder and a polyhedron, as desired. The self-locking device may further include a holding member (not shown in Figure 2A), which may be a spring, with one end of the spring being fixed o the housing 101 and the other end of the spring being configured to apply a pretightening force on the lock block 103 along a direction from the lock block 103 towards the vertex of the angle $\alpha$. Here, the locking rod 102 is in contact with the housing 101, but the contact face of the locking rod 102 with respect to the housing 101 is smooth or substantially smooth.

In the first example of the self-locking device, the lock block 103 is in frictional contact with both the first and second frictional contact faces W and M within the cavity of the housing 101, to lock the locking rod 102 in such a way that the locking rod 102 is movable in a first direction F1 with respect to the housing 101 and is stopped in a second direction F2 opposite to the first direction F1, so that the locking rod 102 can be locked at any continuous locking positions. Here, the first direction F1 is basically the direction from the lock block 103 towards the vertex of the angle $\alpha$. If a force is applied to the lock block 103 in a direction opposite to the direction from the lock block 103 towards the vertex of the angle $\alpha$ (against the force applied to the lock block 103 by a holding member, if any) to release the lock block 103 from at least one of the first and second frictional contact faces W and M, the locking rod 102 is unlocked and hence is movable in the second direction F2. Therefore, as long as the lock block 103 is maintained in contact with the frictional contact faces W and M, the locking rod 102 is prevented from moving in the second direction F2.

The theory about self-locking of the first example of the self-locking device is described below.

As shown in Fig.2A, a force applied to the lock block 103 by the first frictional contact face W is denoted by $R_{13}$, a force applied to the lock block 103 by the second frictional contact face M is denoted by $R_{23}$, a pretightening force P, which is at an angle $\beta$ with respect to the second frictional contact face M, is applied to the lock block 103 by a spring, the first frictional contact face W is at an angle $\alpha$ with respect to the second frictional contact face M, a frictional angle and a friction factor between the lock block 103 and the first frictional contact face W are denoted by $\varphi_1$ and $\mu_1$, respectively, and a frictional angle and a friction factor between the lock block 103 and the second frictional contact face M are denoted by $\varphi_2$ and $\mu_2$, respectively, where $\mu_1 = \tan\varphi_1$ and $\mu_2 = \tan\varphi_2$. Depending actual applications, $\varphi_1$ may or may not be equal to $\varphi_1$. The normals of the first and second frictional contact faces are denoted by $Y_1$ and $Y_2$, respectively.

According to such a criterion that the generated resistance is less than or equal to zero in the case of reversal of stroke, as shown in Fig.2B, a self-locking condition is determined as follows.

$$\frac{R_{13}}{\sin(90^\circ + \varphi_2 - \beta)} = \frac{P}{\sin(\alpha - \varphi_1 - \varphi_2)},$$

that is,

$$P = R_{13} \frac{\sin(\alpha - \varphi_1 - \varphi_2)}{\cos(\varphi_2 - \beta)}.$$

Therefore, to prevent the release of the lock block from the first and second frictional contact faces, P shall be less than or equal to 0. Considering $-90^\circ < \varphi_2 - \beta < 90^\circ$, then $\cos(\varphi_2-\beta)>0$, and hence $\alpha \leq \varphi_1+\varphi_2$, i.e. the condition for self-locking.

That is, if the angle $\alpha$ is less than or equal to the sum of the frictional angles $\varphi_1$ and $\varphi_2$, i.e. $\alpha \leq \varphi_1+\varphi_2$, the locking rod 102 is allowed to be moved in the first direction F1 with respect to the housing 101, but locked in the second direction F2 opposite to the first direction F2, so that the locking rod 102 can be continuously locked, i.e. locked at any of continuous locking positions.

If the housing 101, the locking rod 102 and the lock block 103 of the self-locking device are all made of steel, approximately, the frictional angles $\varphi_1=\varphi_2=8.5^\circ$ since the friction factor of steel is about 0.15, thus the angle $\alpha$ is less than or equal to about 17°. However, the self-locking device may be made of any other suitable material such as plastic or ceramic, and even the same component of the device may be made of various materials.

Based on the operation principle of the first example of the self-locking device, it is possible to combine multiple, e.g. two, self-locking devices as desired.

Figs.2C-2D show the structure and operation principle of the second example of the self-locking device in the invention.

As shown in Figure 2C, the second example of the self-locking device is a combination of two first examples of the self-locking device. Particularly, the second example of the self-locking device includes a housing 111 with a cavity therein, a locking rod 112 that is at least partially within the cavity, a first lock block 113 and a second lock block 113a. The wall of the cavity of the housing 1 includes a first frictional contact face 111W and a fourth frictional contact face 111M, the locking rod 112 includes a second frictional contact face 112M and a third frictional contact face 112W, the first and second frictional contact faces 111W and 112M face each other and form an angle $\alpha$ therebetween, and the third and fourth frictional contact faces 112W and 111M face each other and form an angle $\alpha'$ therebetween. The first lock block 113, which is movable, is disposed between and in frictional contact with the first and second frictional contact faces. The second lock block 113a, which is movable, is disposed between and in frictional contact with the third and fourth frictional contact faces. As like in the first example, the second example of the self-locking device may also include holding members which are configured to respectively apply a pretightening forces on the first lock block 113 along a direction from the first lock block 113 towards the vertex of the angle $\alpha$ and a pretightening forces on the second lock block 113a along a direction from the second lock block 113a towards the vertex of the angle $\alpha'$.

With reference to the first example of the self-locking device, given that the angle formed between the first frictional contact face 111W and the second frictional contact face 112M is denoted by $\alpha$, frictional angles of the first lock block 113 with respect to the first and second frictional contact faces are denoted by $\varphi_1$ and $\varphi_2$, respectively, the angle formed between the third frictional contact face 112W and the fourth frictional contact face 111M is denoted by $\alpha'$, and frictional angles of the second lock block 113a with respect to the third and fourth frictional contact faces are denoted by $\varphi_3$ and $\varphi_4$, respectively, if $\alpha \leq \varphi_1+\varphi_2$ and $\alpha'\leq\varphi_3+\varphi_4$, then the locking rod 112 is allowed to be moved in the first direction F1 relative to the housing 111 by an external force, but locked stably in the second direction F2 opposite to the first direction F1, so that the locking rod 112 can be locked at any of continuous locking positions by the lock blocks 113 and 113. In addition, if an angle between the second and third frictional contact faces 112M and 112W is denoted by $\gamma$, and an angle between the first and fourth frictional contact faces 111W and 111M is denoted by $\theta$, then $\theta\leq\varphi_1+\varphi_2+\varphi_3+\varphi_4+\gamma$.

For example, if the housing 111, the locking rod 112 and the lock blocks 113 and 113 a of the self-locking device are all made of steel, approximately, the frictional angles $\varphi_1$, $\varphi_2$, $\varphi_3$, and $\varphi_4$ each equal to 8.5°, since the friction factor of steel is about 0.15, thus the angles $\alpha$ and $\alpha'$ each are less than or equal to about 17°. However, the self-locking device may be made of any other suitable material such as plastic or ceramic, and even the same component of the device may be made of various materials.

The self-locking device is further described below with reference to Figures 3A, 3B, 3C and 3D. Particularly, the self-locking device includes: a housing 504 with a cavity therein, a locking rod 505, a first lock block 508, and a second lock block 509. The wall of the cavity of the housing 504 includes a first frictional contact face 511 and a fourth frictional contact face 514, and the locking rod 505 includes a second frictional contact face 512 and a third frictional contact face 513. The locking rod 505 is movable into the cavity of the housing 504, so that the second frictional contact face 512 faces the first frictional contact face 511, and the third frictional contact face 513 faces the fourth frictional contact face 514. Further, the first lock block 508 is movable and may be placed between and in contact with the first frictional contact face 511 and the second frictional contact face 512, and the second lock block 509 is movable and may be placed between and in contact with the third frictional contact face 513 and the fourth frictional contact face 514. The first and second frictional contact faces 511 and 512 form an angle $\alpha$ therebetween, the third and fourth frictional contact faces 513 and 514 form an angle $\alpha'$ therebetween, frictional angles of the first lock block 508 with respect to the first and second frictional contact faces are denoted by $\varphi_1$ and $\varphi_2$, respectively, and frictional angles of the second lock block 509 with respect to the third and fourth frictional contact faces are denoted by $\varphi_3$ and $\varphi_4$, respectively, where $\alpha \leq \varphi_1+\varphi_2$ and $\alpha \leq \varphi_3+\varphi_4$.

As shown in Figure 3C, the orientation of the vertex of the angle $\alpha$ may be very close to the orientation of the vertex of the angle $\alpha'$.

One end of the locking rod 505 may be accommodated within a notch 506 at a second end of the clamp arm 502, but is provided with a flange to engage with the second end of the clamp arm 502. The other end of the locking rod 505 is also provided with a flange, which is used to pull or press the locking rod 505.

The self-locking device 504 may be integrally formed with the clamp arm 501 as one body, or may be movably connected with the clamp arm 501 (as shown in the eighth embodiment below).

An end of the lock block 508 and/or an end of the lock block 509 may extend out of the cavity of the housing 504, so as to be applied by a force conveniently.

Preferably, $0<\alpha\leq17°$, and/or $0<\alpha'\leq17°$.

Preferably, the first frictional contact face 511 is disposed symmetrically with the fourth frictional contact face 514 with respect to a longitudinal axis of the housing 504, and the second frictional contact face 512 is disposed symmetrically with the third frictional contact face 513 with respect to a longitudinal axis of the locking rod 505, so that $\alpha=\alpha'$.

The lock block 508 is slidable on the first frictional contact face 511, and the lock block 509 is slidable on the fourth frictional contact face 514. Particularly, at least one first guide slot or ridge for the lock block 508 and at least one second guide slot or ridge for the lock block 509 are provided on the inner wall of the housing 504, correspondingly, a ridge or guide slot matching with the first guide slot or ridge is provide on the lock block 508, and a ridge or guide slot matching with the second guide slot or ridge is provide on the lock block 509.

The self-locking device further includes at least one holding member 507, one end of which abuts against the housing 504 and the other end of which abuts against the lock block 508 and/or the lock block 509, and the holding member 507 is configured to maintain the lock blocks 508 and 509 to be in contact with the locking rod 505. As shown in Figures 3A-3D, the holding member 507 is embodied as a spring, which is placed between a bottom surface of the housing 504 that faces the opposite clamp arm (i.e. the camp arm 502) and the flanges of the lock blocks 508 and 509.

In use of the fastener of the embodiment, referring to Figure 3A, an object to be clamped is sandwiched between the clamp arms 501 and 502, an end of the locking rod 505 is inserted into the notch 506 at the second end of the clamp arm 502 to engage the clamp arm 502, then the other end of the locking rod 505 is drawn in a direction away from the clamp arm 502 (referred to as a locking direction hereinafter), and meanwhile the lock blocks 508 and 509 are moved towards the vertexes of the angles $\alpha$ and $\alpha'$ (for example, under the effect of the holding member 507) to be maintained in contact with the housing 504 and the locking rod 505. Given the self-locking principle of the self-locking device, the clocking rod 505 now is moveable in the locking direction, but is prevented from moving in a direction (referred to as an unlocking direction hereinafter) opposite to the locking direction, so that the clamp arms 501 and 502 are locked tightly to clamp the object firmly. To release the fastener from the object, the lock block 508 and/or the lock block 509 is moved in the locking direction to release the locking rod 505, which is in turn can be moved in the unlocking direction, thus the self-locking device is unlocked.

As such, the self-locking device can be locked at any of continuous locking positions, and can be in the locked state as long as the lock block(s) is in contact with the frictional contact faces of both the locking rod and the housing.

Figures 3E-3G show a third example of the fastener, two clamp arms of this fastener and a connection therebetween are like those in the first example of the fastener, particularly, an end of a clamp arm 501' of the fastener winds an end of the clamp arm 502' to form a rotatable connection, and a tip 517 at the end of the clamp arm 501' is located within a cavity between the two clamp arms and is in frictional contact with the object clamped by the fastener. Preferably, a cylindrical sleeve 515, which may or may not have a longitudinal slit, is disposed in the rotatable connection. Further in the third example, the housing 504' of the self-locking device is rotatably connected with the clamp arm 501' through a lateral tab 518, which winds the clamp arm 501' and a free end of which is located within the cavity between the two clamp arms and is in frictional contact with the object clamped by the fastener. A hasp 519 is provided and winds the other end of the clamp arm 502', an end 521 of the hasp 519 is provided with a notch for engaging an end of the locking rod 505 of the self-locking device, and the other end 510 of the hasp 519 is located within the cavity and is in frictional contact with the object clamped by the fastener. The housing 504' may be fixed or rotatable relative to the clamp arm 501' connected thereto, and in the latter case, a rotation axis of the housing 504' is closer to the hasp 519 than a rotation axis of the clamp arm 501', so that the fastener is more flexible and convenient in use, and the locking rod 505 can be made shorter. Here, the clamp arms 501' and 502' may be formed by steel bars.

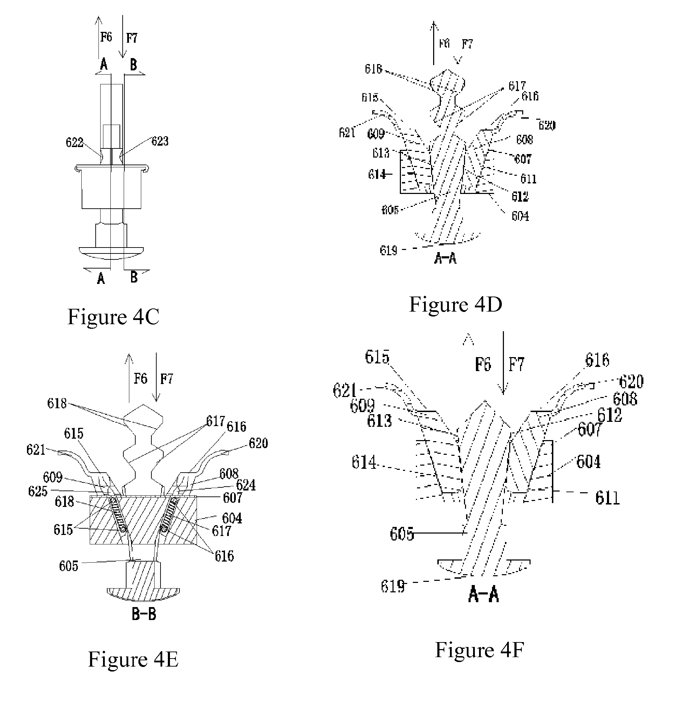

Figures 4A-4F show profile views and sectional views of a fourth example of the self-locking device, which is similar to the third example of the self-locking device. The self-locking device shown in Figures4A-4F includes: a housing 604 with a cavity therein, a locking rod 605, a first lock block 608, and a second lock block 609. The wall of the cavity of the housing 604 includes a first frictional contact face 611 and a fourth frictional contact face 614, and the locking rod 605 includes a second frictional contact face 612 and a third frictional contact face 613. The locking rod 605 is movable into the cavity of the housing 604, so that the second frictional contact face 612 faces the first frictional contact face 611, and the third frictional contact face 613 faces the fourth frictional contact face 614. Further, the first lock block 608 is movable and may be placed between and in contact with the first frictional contact face 611 and the second frictional contact face 612, and the second lock block 609 is movable and may be placed between and in contact with the third frictional contact face 613 and the fourth frictional contact face 614. The first and second frictional contact faces 611 and 612 form an angle $\alpha$ therebetween, the third and fourth frictional contact faces 613 and 614 form an angle $\alpha'$ therebetween, frictional angles of the first lock block 608 with respect to the first and second frictional contact faces are denoted by $\varphi_1$ and $\varphi_2$, respectively, and frictional angles of the second lock block 609 with respect to the third and fourth frictional contact faces are denoted by $\varphi_3$ and $\varphi_4$, respectively, where $\alpha \leq \varphi_1 + \varphi_2$ and $\alpha \leq \varphi_3 + \varphi_4$.

As shown in Figure 4D, the orientation of the vertex of the angle $\alpha$ may be very close to the orientation of the vertex of the angle $\alpha'$.

Preferably, $0 < \alpha \leq 17°$, and/or $0 < \alpha' \leq 17°$.

Preferably, the first frictional contact face 611 is disposed symmetrically with the fourth frictional contact face 614 with respect to a longitudinal axis of the housing 604, and the second frictional contact face 612 is disposed symmetrically with the third frictional contact face 613 with respect to a longitudinal axis of the locking rod 605, so that $\alpha = \alpha'$.

The lock block 608 is slidable on the first frictional contact face 611, and the lock block 609 is slidable on the fourth frictional contact face 614. Particularly, at least one first guide slot or ridge for the lock block 608 and at least one second guide slot or ridge for the lock block 609 are provided on the inner wall of the housing 604, correspondingly, a ridge or guide slot matching with the first guide slot or ridge is provide on the lock block 608, and a ridge or guide slot matching with the second guide slot or ridge is provide on the lock block 609.

In the self-locking device, at least one holding member 617 or 618 is provided inside the housing 604 for each of the lock blocks. One end of the holding member 617 or 618 abuts against the inner wall or an upper cover of the housing 504, and the other end thereof abuts against the lock block 608 or 609, to maintain the lock blocks 608 and 609 to be in contact with the locking rod 605 and to be within the cavity of the housing 604. The holding members 617 and 618 are embodied as springs herein, which are symmetrically placed in slots 624 and 625 on both sides of the locking rod 605. Preferably, two beads 616 and 615 are provided at both ends of the holding members 617 and 618, to stabilize the holding members 617 and 618. The upper cover 607 is fixed to the housing 604 via a tab 610.

An end of the lock block 608 and/or the lock block 609 may be located outside of the cavity of the housing 604 and is provided with a flange 620 and/or 621, to which a lifting force may be applied. The end of the lock block 608 and/or the lock block 609 may be further provided with a platform 606 and/or 615, to which a pressing force may be applied.

In use of the fastener of the embodiment, referring to Figure 4E, the locking rod 605 is inserted between the lock blocks 608 and 609 along a direction F6, and the locking rod 605 and the lock blocks 608, 609 are simultaneously actuated so that the locking rod 605 is moved in the direction F6 and the lock blocks 608 and 609 are moved in a direction F7 opposite to the direction F6, with the lock blocks 608 and 609 being maintained in contact with the housing 604 and the locking rod 605. This may be implemented by pressing the platforms 615 and 616 and pulling the flanges 617 and 618. Due to the self-locking principle, the locking rod 605 is movable in the direction F6, but is prevented from moving in the direction F7, thereby locking the locking rod 605. To unlock the self-locking device, the lock block 608 and/or the lock block 609 is moved in the direction F6 to separate from the locking rod 605 to release the locking rod 605, which is in turn can be moved in the direction F7, thus the self-locking device is unlocked.

Preferably, the other end of the locking rod 605 is provide with a cap 619, to which a force may be applied to push the locking rod 605 into the cavity of the housing 604, and the cap 619 is also used to prevent the locking rod 605 from entirely falling through the housing 604.

Figure 4F shows that the locking rod may be shortened as desired.

The above described fastener may be used individually, or two or more fasteners are combined to form a rotatable construction fastener or a right-angle construction fastener.

The present invention also discloses a rotatable construction fastener including two sub-fasteners which may be embodied as any of the above first to third examples of the fastener. A clamp arm of one of the two sub-fasteners is rotatably connected (e.g. by a rivet connection) with a clamp arm of the other of the two sub-fasteners to form a rotation base of the rotatable construction fastener.

The present invention also discloses a right-angle construction fastener including two sub-fasteners which may be embodied as any of the above first to third examples of the fastener. A clamp arm of one of the two sub-fasteners is fixedly connected (e.g. by welding or one-body forming) with a clamp arm of the other of the two sub-fasteners to form a base of the right-angle construction fastener.

Figure 3I shows a rotatable construction fastener formed by two sub-fasteners embodied as the third example of the fastener shown in Figure 3E. As shown in Figure 3I, two clamp arms 502' of the two sub-fasteners are rotatably connected with each other, for example by a rivet connection. The rivet connection may include rivet plates 523, 531 and a rivet 532 connecting thereto, where the rivet plate 523 is fixed to one of the clamp arms forming the rotatable base of the rotatable construction fastener, and the rivet plate 531 is fixed to the other one of the clamp arms forming the rotatable base.

Of course, the sub-fasteners may be alternatively embodied as other examples of the fasteners described above.

Figure 3H shows a schematic perspective view of a right-angle construction fastener including two sub-fasteners which are embodied as the third example of the fastener described as above. Two clamp arms 502' of the two sub-fasteners are fixed to each other at a right angle, for example by welding, to form a base of the right-angle construction fastener. The base of the right-angle construction fastener may alternatively be formed in one body.

Figures 1D-1F show another right-angle construction fastener including two sub-fasteners which are embodied as the second example of the fastener described as above. Two clamp arms 1305 of the two sub-fasteners are fixed to each other at a right angle, for example by welding, to form a base of the right-angle construction fastener. Figure 1E shows a section of the right-angle construction fastener taken along a line A-A in Figure 1D.

The two clamp arms forming the base of the right-angle construction fastener are hollow. That is, these two clamp arms may be formed by shaping of steel bars. When the right-angle construction fastener is locked onto an object, these clamp arms apply higher pressure onto the object due to the reduced contact areas between the clamp arms and the object, so that the friction force between the clamp arms and the object is increased, thereby significantly enhancing the skidproof effect of the fastener. Experiments show that the skidproof effect of the fastener is improved by two or more times than the conventional fasteners.

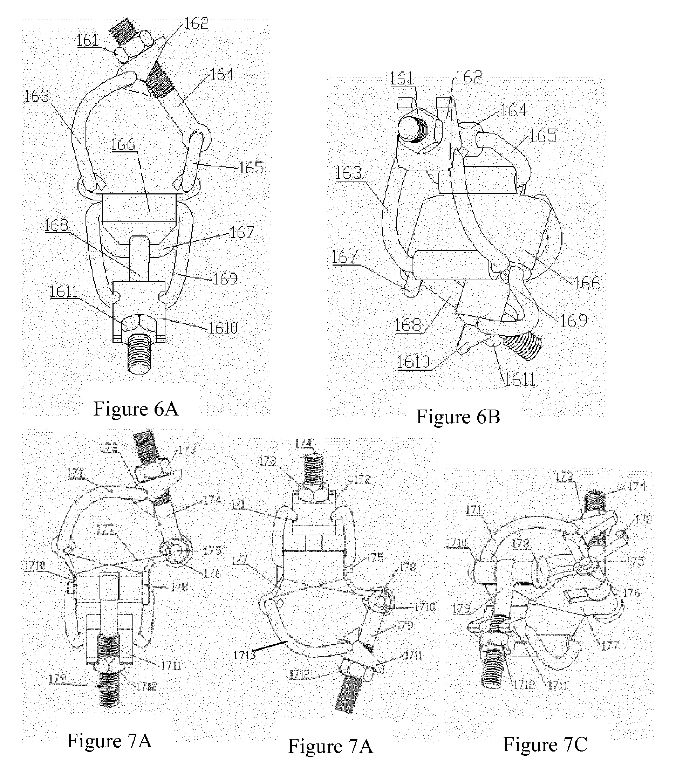

Figures 6A-6B show a right-angle construction fastener according to the fifth embodiment of the invention. The right-angle construction fastener includes two sub-fasteners, and a base 166 of the right-angle construction fastener is made as one body by a steel sheet. One of the sub-fasteners includes clamp arms 163 and 165, a hasp 162, an eye bolt 164, and a nut 161. Both the clamp arms 163 and 165 are formed by steel loops and are rotatably connected through the base 166, which functions as the rotatable connection mechanism between the clamp arms 163 and 165. Two edges of the base 166 respectively wind one end of the clamp arm 163 and one end of the clamp arm 165, and are located within a cavity between the clamp arms 163 and 165 and are in contact with an object clamped by the sub-fastener. One end of the eye bolt 164 is rotatably connected with the clamp arm 165 through a hole at the end, and the other end of the eye bolt 164 is configured to engage with the hasp 162 through the nut 161. The hasp 162 winds the other end of the clamp arm 163. One end of the hasp 162 is provided with a notch, through which the eye bolt 164 may pass and then the nut 161 is screwed onto the bolt 164 to engage with the hasp 162. The other end of the hasp 162 winds the clamp arm 163, and is located within the cavity between the clamp arms 163 and 165 and in contact with the object clamped by the sub-fastener. Here, the base 166 has a simply structure and is easy to be manufacture by a steel sheet. The other one of the sub-fasteners includes clamp arms 169 and 167, a hasp 1610, an eye bolt 168, and a nut 1611. Likewise, both the clamp arms 169 and 167 are formed by steel loops and are rotatably connected through the base 166, which also functions as the rotatable connection mechanism between the clamp arms 169 and 167. Another two edges of the base 166 respectively wind one end of the clamp arm 169 and one end of the clamp arm 167, and are located within a cavity between the clamp arms 169 and 167 and are in contact with an object clamped by the sub-fastener. One end of the eye bolt 168 is rotatably connected with the clamp arm 167 through a hole at the end, and the other end of the eye bolt 168 is configured to engage with the hasp 1610 through the nut 1611. The hasp 1610 winds the other end of the clamp arm 169. One end of the hasp 1610 is provided with a notch, through which the eye bolt 168 may pass and then the nut 1611 is screwed onto the bolt 168 to engage with the hasp 1610. The other end of the hasp 1610 winds the clamp arm 169, and is located within the cavity between the clamp arms 169 and 167 and in contact with the object clamped by the sub-fastener.

Herein, the nuts 161 and 1611 may be blind nuts to protect threads of the bolt against concrete, dust, sands, etc.

Figures 7A-7C show a right-angle construction fastener according to the sixth embodiment of the invention. The right-angle construction fastener includes two sub-fasteners (i.e. a first sub-fastener and a second sub-fastener), and a base 177 of the right-angle construction fastener is formed as one body by a steel sheet and is fluctuant, to better surround the clamped object. As shown, the first sub-fastener includes a clamp arm 171, a hasp 172, an eye bolt 174, a nut 173 and a pin 175. The clamp arm 171 is formed by a steel loop, the base 177 also functions as another clamp arm of the first sub-fastener, an edge of the base 177 winds an end of the clamp arm 171 to form a rotatable connection between the clamp arm 171 and the base 177, and the edge is located within a cavity between the clamp arm 171 and the base 177 and in contact with an object clamped by this sub-fastener. The pin 175 passes through a hole at one end of the bolt 174, and an opposite edge of the base 177 winds the pin 175 so that a rotatable connection is formed between the bolt 174 and the base 177. One end of the pin 175 is provided with a cap, and the other end of the pin 175 is connected with a buckle 176 to prevent the pin 175 from falling off. The other end of the bolt 174 is configured to engage with the hasp 172 through a nut 173. The hasp 172 winds the other end of the clamp arm 171. One end of the hasp 172 is provided with a notch, through which the eye bolt 174 may pass and then the nut 173 is screwed onto the bolt 174 to engage with the hasp 172. The other end of the hasp 172 winds the clamp arm 171, and is located within the cavity between the clamp arm 171 and the base 177 and in contact with the object clamped by the first sub-fastener. The second sub-fastener includes a clamp arm 1713, a hasp 1711, an eye bolt 179, a nut 1712 and a pin 178, which are configured like the above clamp arm 171, the hasp 172, the eye bolt 174, the nut 173 and the pin 175 of the first sub-fastener, and will not be further described again. Please be noted that the base 177 also functions as a clamp arm of the second sub-fastener.

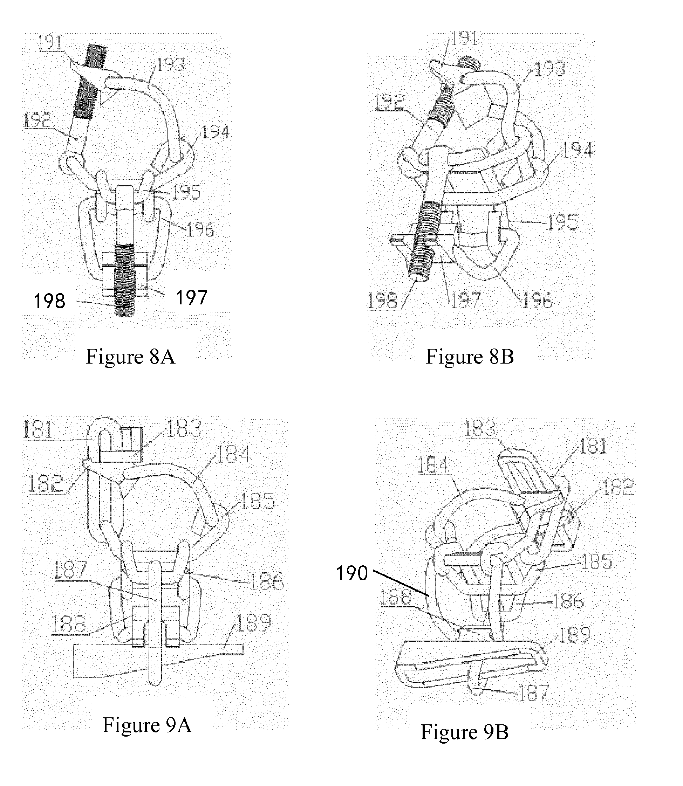

Figures 8A-8B show a right-angle construction fastener according to the seventh embodiment of the invention. The right-angle construction fastener includes a first sub-fastener and a second sub-fastener. The first sub-fastener includes clamp arms 193 and 194, a hasp 191, an eye bolt 192, and a nut (not shown) configured to be screwed onto the bolt 192, and the second sub-fastener includes clamp arms 195 and 196, a hasp 197, an eye bolt 198, and a nut (not shown) configured to be screwed onto the bolt 198. The right-angle construction fastener of the present embodiment differs from the right-angle construction fastener of the fifth embodiment in that the combination of the base 166 and the clamp arms 165, 167 is replaced by the combination of the clamp arms 194 and 195. Particularly, one end of the clamp arm 194 passes through the hole at an end of the eye bolt 192 to form a rotatable connection with the bolt 192, and the other end of the clamp arm 194 winds the clamp arm 193 to form a rotatable connection with the clamp arm 193. Likewise, one end of the clamp arm 195 passes through the hole at an end of the eye bolt 198 to form a rotatable connection with the bolt 198, and the other end of the clamp arm 195 winds the clamp arm 196 to form a rotatable connection with the clamp arm 196. The clamp arm 194 extends through the cavity between the two clamp arms of the second sub-fastener, the clamp arm 195 extends through the cavity between the two clamp arms of the first sub-fastener, and the clamp arms 194 and 195 are fixed to each other to form the base of the right-angle construction fastener, by for example welding. The resultant base is advantageous in that, even if the connection between the clamp arms 194 and 195 is broken, the first sub-fastener will not be broken up with the second sub-fastener because the clamp arm 194 and the second arm 195 hook each other.

Figures 9A-9B show a right-angle construction fastener according to the eighth embodiment of the invention. The right-angle construction fastener includes a first sub-fastener and a second sub-fastener. The first sub-fastener includes clamp arms 184 and 185, a hasp 1821, a lock loop 181, and a wedged lock block 183, and the second sub-fastener includes clamp arms 190 and 186, a hasp 188, a lock loop 187, and a wedged lock block 189. The right-angle construction fastener of the present embodiment differs from the right-angle construction fastener of the seventh embodiment in that the combination of the eye bolt 192 and the nut is replaced by the combination of the lock loop 181 and the wedged lock block 183, and the combination of the eye bolt 198 and the nut is replaced by the combination of the lock loop 187 and the wedged lock block 189. Particularly, one end of the lock loop 181 hooks one end of the clamp arm 185, the other end of the lock loop 181 is configured to be passed through by the wedged lock block 183, and is lifted gradually by the lock block 183 as the wedged lock block 183 is moved, thereby locking the first sub-fastener. Likewise, one end of the lock loop 187 hooks one end of the clamp arm 186, the other end of the lock loop 187 is configured to be passed through by the wedged lock block 189, and is lifted gradually by the lock block 189 as the wedged lock block 189 is moved, thereby locking the second sub-fastener.

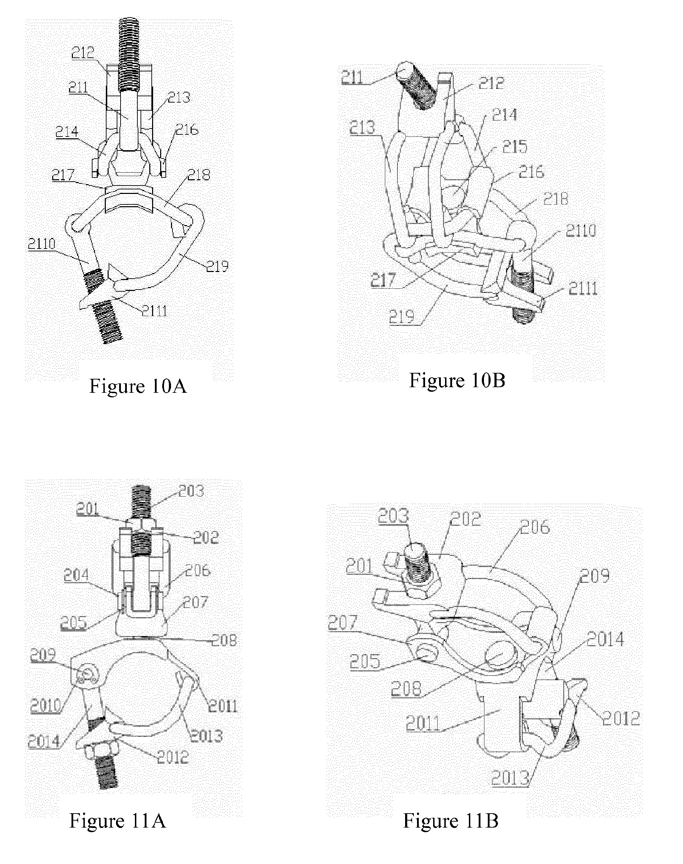

Figures 10A-10B show a rotatable construction fastener according to the ninth embodiment of the invention. The rotatable construction fastener includes a first sub-fastener and a second sub-fastener. The first sub-fastener includes clamp arms 213 and 214, a hasp 212, an eye bolt 211, and a nut (not shown) configured to be screwed onto the eye bolt 211, and the second sub-fastener includes clamp arms 218 and 219, a hasp 2111, an eye bolt 2110, and a nut (not shown) configured to be screwed onto the eye bolt 2110. The rotatable construction fastener of the present embodiment differs from the right-angle construction fastener of the seventh embodiment in that the clamp arms 214 and 218 are rotatably connected with each other, but in the seventh embodiment, the clamp arms 194 and 195 are fixedly connected with each other. Particularly, the clamp arm 214 is fixed to a plate 216, the clamp arm 218 is fixed to a plate 217, and the plates 216 and 217 are rivet connected through a rivet 215 to achieve the rotatable connection between the clamp arms 214 and 218, so that the first and second sub-fasteners o the rotatable construction fastener are rotatably connected with each other. Such rotatable construction fastener has a light weight and is easy to manufacture.

Figures 11A-11B show a rotatable construction fastener according to the tenth embodiment of the invention. The rotatable construction fastener includes a first sub-fastener and a second sub-fastener. The first sub-fastener includes clamp arms 206 and 207, a hasp 202, an eye bolt 203, and a nut 201 configured to be screwed onto the eye bolt 203. A pin 205 is provided to pass through both a through hole at one end of the eye bolt 203 and a through hole at one end of the clamp arm 207, so that the eye bolt 203 is rotatable relative to the clamp arm 207. The other end of the clamp arm 207 winds one end of the clamp arm 206 to form a rotatable connection between the clamp arm 207 and the clamp arm 206, and is located within a cavity for accommodating an object between the clamp arm 207 and the clamp arm 206 and in contact with the clamped object. The clamp arm 206 is made of a steel bar and the clamp arm 207 is made of a steel sheet. The hasp 202 winds the other end of the clamp arm 206. One end of the hasp 202 is provided with a notch, through which the eye bolt 203 may pass and then the nut 201 is screwed onto the bolt 203 to engage with the hasp 202. The other end of the hasp 202 winds the clamp arm 206, and is located within the cavity between the clamp arms 206 and 207 and in contact with the object clamped by the first sub-fastener. Likewise, the second sub-fastener includes clamp arms 2011 and 2013, a hasp 2012, an eye bolt 2014, and a nut configured to be screwed onto the eye bolt 2014. A pin 209 is provided to pass through both a through hole at one end of the eye bolt 2014 and a through hole at one end of the clamp arm 2011, so that the eye bolt 2014 is rotatable relative to the clamp arm 2011. The other end of the clamp arm 2011 winds one end of the clamp arm 2013 to form a rotatable connection between the clamp arm 2011 and the clamp arm 2013, and is located within a cavity for accommodating an object between the clamp arm 2011 and the clamp arm 2013 and in contact with the clamped object. The clamp arm 2013 is made of a steel bar and the clamp arm 2011 is made of a steel sheet. The hasp 2012 winds the other end of the clamp arm 2013. One end of the hasp 2012 is provided with a notch, through which the eye bolt 2014 may pass and then the nut is screwed onto the bolt 2014 to engage with the hasp 2012. The other end of the hasp 2012 winds the clamp arm 2013, and is located within the cavity between the clamp arms 2013 and 2011 and in contact with the object clamped by the second sub-fastener. The clamp arms 207 and 2011 are rotatably connected with each other via a rivet connection, herein.

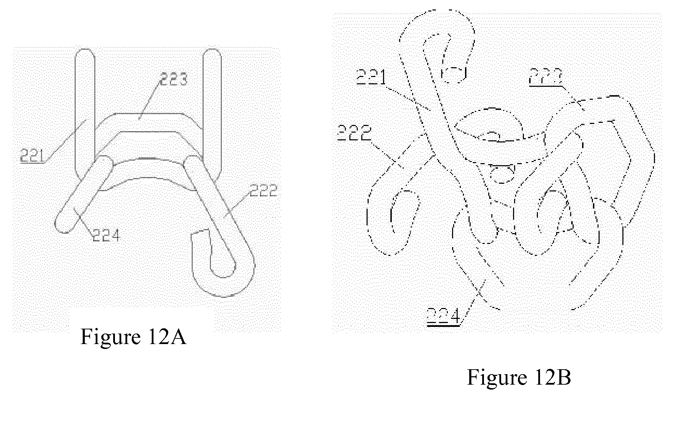

In the invention, the bases of the construction fasteners may be implemented in many other manners. For example, as shown in Figures 12A-12B, a clamp arm 221, a clamp arm 222, a connecting loop 223 and a connecting loop 224 are connected in sequence, and are all formed by steel bars. The connecting loops 223 and 224 are configured to connect locking means such as bolts, and each of the clamp arms 221 and 222 may be rotatably connected with another clamp arm to for a sub-fastener, thereby forming a right-angle construction fastener.

The preferable embodiments of the invention have been described, but the invention is not limited thereto. Various modifications and alterations to the invention may occur to those skilled in the art, and all such modifications and alterations fall into the scope of the invention, without departing from the principle of the invention.

**Claims**

1. A fastener for clamping an object, comprising a first clamp arm and a second clamp arm, wherein a first end of the first clamp arm and a first end of the second clamp arm are rotatably connected with each other, a cavity for accommodating an object clamped by the fastener is formed between the first clamp arm and the second clamp arm, a first hasp for engaging with a locking device is connected with a second end of the first clamp arm, and the locking device is further configured to engage with a second end of the second clamp arm.

2. The fastener of claim 1, wherein a first end of the first hasp is extended through an opening at the second end of the first clamp arm towards the cavity to wind an edge of the opening, and is located within the cavity and in frictional contact with the object clamped by the fastener.

3. The fastener of claim 2, wherein a second end of the first hasp, which is opposite to the first end of the first hasp, is provided with a notch or through hole configured to be passed through by the locking device, and the first end of the first hasp is sandwiched between the second end of the hasp and the object clamped by the fastener.

4. The fastener of any one of claims 1 to 3, wherein the fastener is a construction fastener, the first clamp arm is a cover arm of the construction fastener, the second clamp arm is a base of the construction fastener, and an opening in communication with the cavity is provided at an intermediate portion of the first clamp arm between the first end and the second end of the first clamp arm; or
the fastener is a construction fastener, the first clamp arm is a base of the construction fastener, the second clamp arm is a cover arm of the construction fastener, and an opening in communication with the cavity is provided at an intermediate portion of the second clamp arm between the first end and the second end of the second clamp arm.

5. The fastener of claim 4, wherein at least one of the cover arm and the base is formed by a bent steel bar or by a closed or unclosed steel loop; or
the cover arm is formed by a bent steel bar and the base is formed by a steel sheet.

6. The fastener of any one of claims 1 to 5, wherein the first end of the first clamp arm and the first end of the second clamp arm are rotatably connected with each other by a rotatable connection mechanism which includes a pin and a winding portion rotatably winding the pin, and wherein the pin is connected with or is a part of one of the first and second clamp arms, a first end of the winding portion is connected with or is a part of the other of the first and second clamp arms, and a second end of the winding portion winds the pin and is located within the cavity and in frictional contact with the object clamped by the fastener.

7. The fastener of claim 6, wherein an opening in communication with the cavity is provided at the first end of the first clamp arm, the pin is formed by an edge of the opening at the first end of the first clamp arm, and an extended portion, which forms the winding portion, is provided at the first end of the second clamp arm; and wherein the extended portion is extended through the opening at the first end of the first clamp arm towards the cavity to wind an edge of the opening, to form the rotatable connection, and an end of the extended portion is located within the cavity and in frictional contact with the object clamped by the fastener.

8. The fastener of claim 6, further comprising a connection buckle forming the wingding portion, wherein a first opening in communication with the cavity is provided at the first end of the first clamp arm, a second opening in communication with the cavity is provided at the first end of the second clamp arm, and an edge of the first opening forms the pin, and wherein one end of the connection buckle is extended through the first opening towards the cavity to wind the edge of the first opening to form the rotatable connection, the other end of the connection buckle is extended through the second opening towards the cavity to wind an edge of the second opening, and tips at both ends of the connection buckle are located in the cavity and in frictional contact with the object clamped by the fastener.

9. The fastener of claim 6, wherein the first end of the first clamp arm includes a first extended portion which forms the winding portion and winds the pin towards the cavity, the first end of the second clamp arm includes a second extended portion which winds the pin towards the cavity, so that the rotatable connection is formed, and wherein an end of the first extended portion and an end of the second extended portion are located within the cavity and in frictional contact with the object clamped by the fastener.

10. The fastener of any one of claims 1 to 9, wherein a second hasp is provided at the second end of the second clamp arm, an opening in communication with the cavity is provided at the second end of the second clamp arm, an end of the second hasp is provided with a notch or through hole configured to engage with the locking device, an opposite end of the second hasp is extended through an opening at the second end of the second clamp arm towards the cavity to wind an edge of the opening to form the rotatable connection, and the opposite end of the second hasp is located within the cavity and in frictional contact with the object clamped by the fastener; or,
an opening in communication with the cavity is provided at the second end of the second clamp arm, the locking device is a bolt, a tip at one end of the bolt is extended through the opening at the second end of the second clamp arm toward the cavity to wind an edge of the opening to form the rotatable connection, and the tip at the one end of the bolt is located within the cavity and in frictional contact with the object clamped by the fastener; or,
a self-locking device is provided at the second end of the first clamp arm, and includes a housing, a locking rod, a first lock block and a second lock block, the housing is formed by the first hasp, and the locking rod forms the locking device;
the housing includes a cavity, and a wall of the cavity of the housing includes a first frictional contact face and a fourth frictional contact face,
the locking rod includes a second frictional contact face and a third frictional contact face, and is movable into the cavity of the housing so that the first and second frictional contact faces face each other and the third and fourth frictional contact faces face each other, and wherein the first lock block is movable between the first and second frictional contact faces and is in contact with the first and second frictional contact faces, and the second lock block is movable between the third and fourth frictional contact faces and is in contact with the third and fourth frictional contact faces;

the first and second frictional faces form an angle $\alpha$ therebetween, the third and fourth frictional contact faces form an angle $\alpha'$ therebetween, and $\alpha \leq \varphi_1 + \varphi_2$ and $\alpha \leq \varphi_3 + \varphi_4$, wherein $\varphi_1$ and $\varphi_2$ represent frictional angles of the first lock block with respect to the first and second frictional contact faces, respectively, and $\varphi_3$ and $\varphi_4$ represent frictional angles of the second lock block with respect to the third and fourth frictional contact faces, respectively;

an end of the locking rod is configured to engage with the second clamp arm;

preferably, at least one end of each of the first and second lock blocks is located outside of the cavity of the housing and includes a flange;

preferably, $0 < \alpha \leq 17°$, and/or $0 < \alpha' \leq 17°$.

11. The fastener of claim 10, wherein the first lock block is slidable on the first frictional contact face, and the second lock block is slidable on the fourth frictional contact face,

preferably, a first guide slot or ridge for the first lock block and a second guide slot or ridge for the second lock block are provided on the wall of the cavity of the housing, correspondingly, a ridge or guide slot matching with the first guide slot or ridge is provide on the first lock block, and a ridge or guide slot matching with the second guide slot or ridge is provide on the second lock block.

12. The fastener of any one of claims 10 to 11, further comprising an elastic member configured to maintain the first and second lock blocks to be in contact with the locking rod, one end of the elastic member abuts against the housing, and the other end of the elastic member abuts against the first and second lock blocks; or

a first elastic member and a second elastic member are provided inside the cavity of the housing, an end of the first elastic member abuts against an inner wall of the housing, and the other end of the first elastic member abuts against the first lock block to prevent the first lock block from being released from the first lock block; and an end of the second elastic member abuts against the inner wall of the housing, and the other end of the second elastic member abuts against the second lock block to prevent the second lock block from being released from the second lock block.

13. A rotatable construction fastener, comprising a first fastener of any one of the claims 1-12 and a second fastener of any one of claims 1-12,

wherein a first clamp arm or a second clamp arm of the first fastener and a first clamp arm or a second clamp arm of the second fastener are rotatably connected with each other to form a base of the rotatable construction fastener.

14. A right-angle construction fastener, comprising a first fastener of any one of the claims 1-12 and a second fastener of any one of claims 1-10,

wherein a first clamp arm or a second clamp arm of the first fastener and a first clamp arm or a second clamp arm of the second fastener are fixedly and perpendicularly connected with each other to form a base of the right-angle construction fastener.

Figure 1A

Figure 1B

Figure 1C

Figure 1D          Figure 1E          Figure 1F

1310

1310

1311          1310          1312

1317

Figure 1G          Figure 1H          Figure 1I

EP 2 924 301 A1

Figure 2A

Figure 2B

18

Figure 2C

Figure 2D

Figure 3A

Figure 3B

Figure 3C

Figure 3D

Figure 3E

Figure 3F

Figure 3G

Figure 3H

Figure 3I

Figure 4A

Figure 4B

Figure 4C

Figure 4D

Figure 4E

Figure 4F

Figure 5A

Figure 5B

Figure 6A

Figure 6B

Figure 7A

Figure 7A

Figure 7C

Figure 8A

Figure 8B

Figure 9A

Figure 9B

Figure 10A

Figure 10B

Figure 11A

Figure 11B

Figure 12A

Figure 12B

# INTERNATIONAL SEARCH REPORT

| | International application No. |
|---|---|
| | PCT/CN2013/087084 |

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: F16B 2/-; E04G 7/-; B25B 33/-; B25B 27/-; E01F 13/-; F16B 7/-; H02G 3/-

Documentation searched other than minimum documentation to the extent that such documents are included in the fields searched

Electronic data base consulted during the international search (name of data base and, where practicable, search terms used)

WPI, EPODOC, CNPAT, CNKI: fastener, fasten+, clip+, lock, self?lock, ring, rotat+, zhou lixin

## C. DOCUMENTS CONSIDERED TO BE RELEVANT

| Category* | Citation of document, with indication, where appropriate, of the relevant passages | Relevant to claim No. |
|---|---|---|
| X | CN 2038932 U (WANG, Jiangan) 07 June 1989 (07.06.1989) description, pages 1-3 and figures 1 and 2 | 1-3, 6-9, 13-14 |
| Y | | 4, 5, 10-12 |
| Y | CN 102747833 A (HEILONGJIANG CONSTRUCTION GROUP CO., LTD. et al.) 24 October 2012 (24.10.2012) the embodiment and figures 1 and 2 | 4, 5 |
| Y | CN 102518626 A (ZHOU, Lixin) 27 June 2012 (27.06.2012) the embodiment and figures 1A-8 | 10-12 |

☒ Further documents are listed in the continuation of Box C.     ☒ See patent family annex.

| | |
|---|---|
| \*    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>16 December 2013 (16.12.2013) | Date of mailing of the international search report<br><br>20 February 2014 (20.02.2014) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>XIANG, Qixiong<br><br>Telephone No. (86-10) 62412846 |

Form PCT/ISA /210 (second sheet) (July 2009)

## INTERNATIONAL SEARCH REPORT

| | International application No. |
|---|---|
| | PCT/CN2013/087084 |

### C (Continuation). DOCUMENTS CONSIDERED TO BE RELEVANT

| Category* | Citation of document, with indication, where appropriate, of the relevant passages | Relevant to claim No. |
|---|---|---|
| E | CN 203285043 U (ZHOU, Lixin) 13 November 2013 (13.11.2013) the embodiment and figures 1A-15C | 1-14 |
| A | US 2004/0159454 A1 (SHIBUYA, Tomio) 19 August 2004 (19.08.2004) the whole document | 1-14 |
| A | JP 2001-248302 A (OMOMO KAZUE) 14 September 2001 (14.09.2001) the whole document | 1-14 |
| A | JP 2000-266014 A (FUJISHIRO TADAHIKO et al.) 26 September 2000 (26.09.2000) the whole document | 1-14 |

Form PCT/ISA /210 (continuation of second sheet) (July 2009)

**INTERNATIONAL SEARCH REPORT**
Information on patent family members

| | International application No. |
|---|---|
| | PCT/CN2013/087084 |

| Patent Documents referred in the Report | Publication Date | Patent Family | Publication Date |
|---|---|---|---|
| CN 2038932 U | 07.06.1989 | None | |
| CN 102747833 A | 24.10.2012 | None | |
| CN 102518626 A | 27.06.2012 | CN 102423995 A | 25.04.2012 |
| | | CN 202326550 U | 11.07.2012 |
| | | WO 2012092852 A | 12.07.2012 |
| | | CA 2824156 A | 12.07.2012 |
| | | CA 2823968 A | 12.07.2012 |
| | | WO 2012092856 A | 12.07.2012 |
| | | CN 102582378 A | 18.07.2012 |
| | | CN 102588399 A | 18.07.2012 |
| | | CN 202463485 U | 03.10.2012 |
| | | CN 202811681 U | 20.03.2013 |
| | | CN 202847348 U | 03.04.2013 |
| | | AU 2012204958 A | 22.08.2013 |
| | | KR 20130114231 A | 16.10.2013 |
| | | EP 2662577 A | 13.11.2013 |
| | | EP 2662222 A | 13.11.2013 |
| | | US 2013300184 A | 14.11.2013 |
| CN 203285043 U | 13.11.2013 | None | |
| US 2004/0159454 A1 | 19.08.2004 | WO 03001069 A | 03.01.2003 |
| | | JP 2003004169 A | 08.01.2003 |
| | | EP 1397598 A | 17.03.2004 |
| | | CN 1516786 A | 28.07.2004 |
| | | DE 60209910 T | 07.09.2006 |
| | | AU 2002345723 A1 | 08.01.2003 |
| JP 2001-248302 A | 14.09.2001 | None | |
| JP 2000-266014 A | 26.09.2000 | None | |

Form PCT/ISA /210 (patent family annex) (July 2009)

# INTERNATIONAL SEARCH REPORT

| International application No. |
| --- |
| PCT/CN2013/087084 |

## A. CLASSIFICATION OF SUBJECT MATTER

F16B 2/06 (2006.01) i

E04G 7/14 (2006.01) i

E04G 7/16 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210480143
- CN 201310049742
- CN 1629420 A
- CN 102322464 A